# EUROPEAN PATENT APPLICATION

(11) **EP 1 983 544 A2**
(43) Date of publication of application: **22.10.2008**
(21) Application number: 08005713.6
(22) Date of filing: 27.03.2008
(51) Int. Cl.: H01J 9/00

(54) **Apparatus for assembling lamps and method of assembling lamps using the same**

(30) Priority: 16.04.2007 KR 20070037053
(71) Applicant: Samsung Electronics Co., Ltd., Yeongtong-gu Suwon-city, Gyeonggi-do 442-742 (KR)
(72) Inventor: Jang, Dae-jin, Chungcheongnam-do (KR); Kim, Hyung-su, Chungcheongnam-do (KR); Koo, Ja-huem, Chungcheongnam-do (KR); Shim, Jung-hyun, Incheon (KR); Yu, Young-ho, Chungcheongnam-do (KR)
(74) Representative: Dr. Weitzel & Partner

(57) **Abstract**

An apparatus (100) for assembling lamps that automatically installs lamps into a container includes a lamp arrangement unit (200) including a retaining-stage (240) formed to receive a plurality of lamps (110), and a lamp press-fitting unit (300) including grippers (310) that holds lamps positioned on the retaining-stage to move lamps, a body press-fitting portion (340) that positions bodies of lamps into a container (120), and a lead press-fitting portion (430) that positions leads (115) of lamps into the container. A method of assembling lamps uses the apparatus.

## Description

### BACKGROUND OF THE INVENTION

### 1. Field of the Invention

The present invention relates to an apparatus for assembling a backlight assembly and an assembly method using the same, particularly an apparatus for assembling lamps that reduces manufacturing time and cost and a method of assembling lamps using the apparatus.

### 2. Description of the Related Art

Liquid crystal displays ("LCDs"), a flat panel display that is currently the most widely used, including two substrates with electrodes and a liquid crystal layer interposed between the substrates, displays images by rearranging the liquid crystal molecules in the liquid crystal layer by applying voltages to the electrodes to control the amount of light passing through the liquid crystal layer.
These LCDs each include a backlight assembly that supplies light to pass through the liquid crystal layer. The backlight assembly includes lamps, a variety of optical sheets, and a container housing them.
In order to install lamps in the container, in the related art, an operator had to install the lamps manually, classifying the polarity of the lamp into a high-voltage region and a low-voltage region.
However, when an operator installs lamps with his/her hands, since the operator has to individually install the lamps into the container, a lot of working time is needed, in addition, the lamps may be damaged in assembly. Further, if a lamp is installed with the polarity inverse, it reduces performance of the LCD.

### BRIEF SUMMARY OF THE INVENTION

The present invention provides an apparatus for assembling lamps that automatically install lamps in a container.
The present invention also provides a method of assembling lamps that automatically install lamps in a container.

According to exemplary embodiments of the present invention, an apparatus for assembling lamps includes a lamp arrangement unit including a retaining-stage formed to receive a plurality of lamps, and a lamp press-fitting unit including grippers that hold lamps positioned on the retaining-stage to move lamps, a body press-fitting portion that positions bodies of lamps into a container, and a lead press-fitting portion that positions leads of lamps into the container.
According to other exemplary embodiments of the invention, a method of assembling lamps includes positioning a plurality of lamps onto a retaining-stage; holding and moving the lamps from the retaining-stage to a container, positioning the bodies of the lamp into the container with a body press-fitting portion, and positioning leads of the lamps into the container with a lead press-fitting portion.

### BRIEF DESCRIPTION OF THE DRAWINGS

The above and other features and advantages of the present invention will become more apparent by describing in detail exemplary embodiments thereof with reference to the attached drawings in which:
FIG. 1 is a perspective view of an exemplary apparatus for assembling lamps according to an exemplary embodiment of the invention;
FIG. 2 is a view illustrating an exemplary lamp arrangement unit included in the exemplary apparatus for assembling lamps shown in FIG. 1;
FIG. 3 is an enlarged view of an exemplary retaining-stage shown in FIG. 2;
FIG. 4 is a view showing an exemplary first lamp press-fitting unit included in the exemplary apparatus for assembling lamps shown in FIG. 1;
FIG. 5 is an enlarged view of an exemplary gripper shown in FIG. 4;
FIG. 6 is a perspective view showing the bottom of the exemplary first lamp press-fitting unit shown in FIG. 4;
FIG. 7 is a front view of the exemplary first lamp press-fitting unit shown in FIG. 6;
FIG. 8 is a plan view of the exemplary gripper shown in FIG. 6;
FIG. 9 is a perspective view of an exemplary body press-fitting portion shown in FIG. 6;
FIG. 10 is a cross-sectional view illustrating the relationship between lamps and the exemplary body press-fitting portion show in FIG. 9;
FIG. 11 is a view showing an exemplary second lamp press-fitting unit included in the exemplary apparatus for assembling lamps shown in FIG. 1;
FIG. 12 is a view showing an exemplary lead press-fitting portion included in the exemplary second lamp press-fitting unit shown in FIG. 11; and
FIG. 13 is a view showing a modification for the exemplary lead press-fitting portion show in FIG. 12.

### DETAILED DESCRIPTION OF THE INVENTION

Advantages and features of the present invention and methods of accomplishing the same may be understood more readily by reference to the following detailed description of exemplary embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.
It will be understood that when an element is referred to as being "on" another element, it can be directly on the other element or intervening elements may be present therebetween. In contrast, when an element is referred to as being "directly on" another element, there are no intervening elements present. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Spatially relative terms, such as "beneath", "below", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Embodiments of the present invention are described herein with reference to cross section illustrations that are schematic illustrations of idealized embodiments of the present invention. As such, variations from the shapes of the illustrations as a result, for example, of manufacturing techniques and/or tolerances, are to be expected. Thus, embodiments of the present invention should not be construed as limited to the particular shapes of regions illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present invention.

The present invention will now be described more fully with reference to the accompanying drawings, in which exemplary embodiments of the invention are shown.

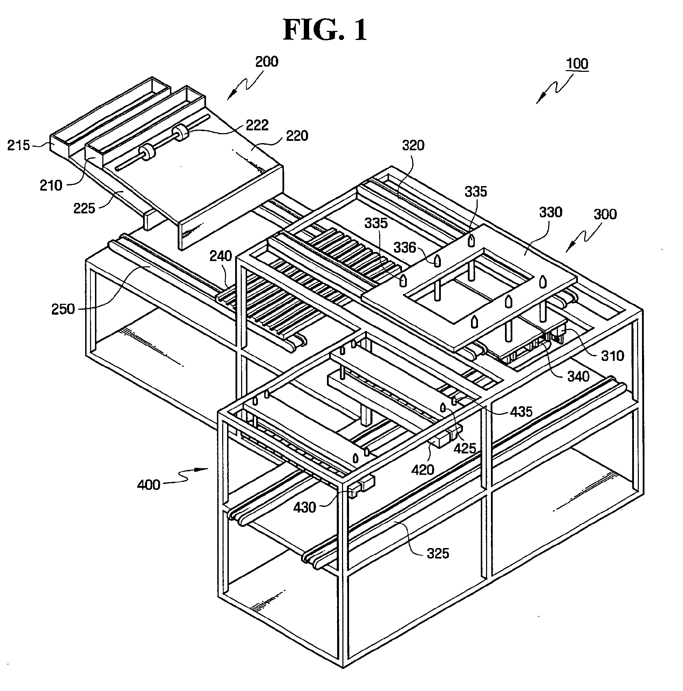

FIG. 1 is a perspective view of an exemplary apparatus for assembling lamps according to an exemplary embodiment of the invention. Referring to FIG. 1, an apparatus 100 for assembling lamps according to an exemplary embodiment of the invention includes a lamp arrangement unit 200, a first lamp press-fitting unit 300, and a second lamp press-fitting unit 400.

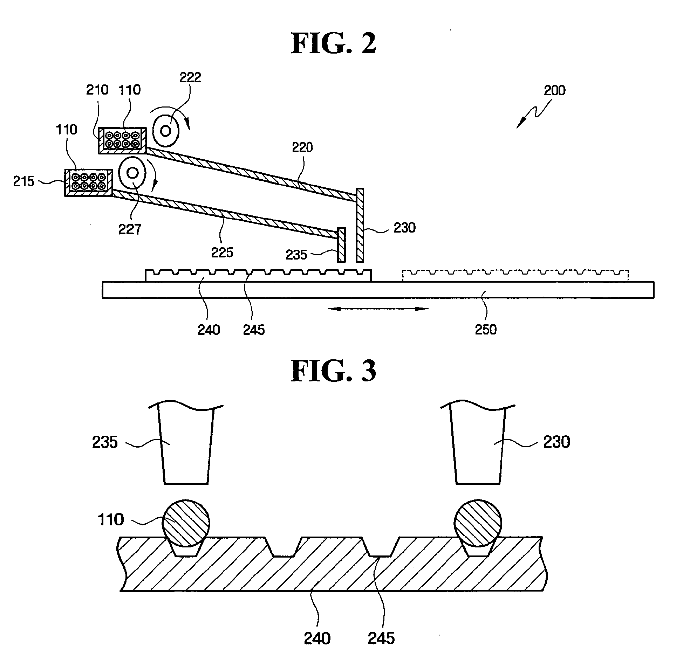

The lamp arrangement unit 200 is described hereafter in detail with reference to FIGS. 1 to 3. FIG. 2 is a view showing the exemplary lamp arrangement unit included in the exemplary apparatus for assembling lamps shown in FIG. 1 and FIG. 3 is an enlarged view of an exemplary retaining-stage shown in FIG. 2.

The lamp arrangement unit 200 includes first and second lamp storages 210, 215 where a plurality of lamps 110 is stored, a retaining-stage 240 where the lamps 110 are arranged in place, first and second positioning portions 230, 235 that position the lamps 110 onto the retaining-stage 240, and first and second lamp transfer portions 220, 225 that transfer the lamps 110 from the first and second lamp storages 210, 215 to the first and second positioning portions 230, 235, respectively.

The lamp arrangement unit 200 classifies the lamps 110 on the basis of their polarities and arranges them on the retaining-stage 240. For example, when a side of a positive lamp 110 is for the high-voltage region and the other of the positive lamp 110 is for the low-voltage region, a side of a negative lamp 110 is for the low-voltage region and the other of the negative lamp 110 is for the high-voltage region. An operator classifies the lamps 110 into the high-voltage region and the low-voltage region and stores them in the first lamp storage 210 or the second lamp storage 215 on the basis of the polarity.

The lamps 110 stored in the first lamp storage 210 and the second lamp storage 215 are transferred to the first positioning portion 230 and the second positioning portion 235 through the first transfer portion 220 and the second transfer portion 225, respectively.

A first arrangement roller 222 and a second arrangement roller 227 are provided above the first transfer portion 220 and the second transfer portion 225, respectively, to prevent lamps 110 from being disarrayed on the first transfer portion 220 and the second transfer portion 225. The first arrangement roller 222 and the second arrangement roller 227 arrange disarrayed lamps 110 by rotating opposite to the movement direction of the first transfer portion 220 and the second transfer portion 225. For example, the first arrangement roller 222 and the second arrangement roller 227 may more effectively prevent the lamps 110 from becoming disarrayed when the cross-section of each roller 222 and 227 is an oval. More particularly, as the portions on the semimajor axes of the first arrangement roller 222 and the second arrangement roller 227 rotate to move close to the first transfer portion 220 and the second transfer portion 225, respectively, the rollers 222 and 227 stop lamps 110 and rearrange the lamps 110 by shifting them back in a direction towards the first and second lamp storages 210 and 215 instead of in a direction towards the first and second positioning portions 230 and 235, respectively. On the other hand, as the portions on the semiminor axes of the first arrangement roller 222 and the second arrangement roller 227 rotate to move close to the first transfer portion 220 and the second transfer portion 225, respectively, the rearranged lamps 110 pass under the rollers 222 and 227 to continue in a direction towards the first and second positioning portions 230 and 235.

The lamps 110 are sequentially positioned at the first positioning portion 230 and the second positioning portion 235 positioned at the ends of the first transfer portion 220 and the second transfer portion 225, respectively, through the above process. The retaining-stage 240 where the lamps 110 are positioned is disposed under the first positioning portion 230 and the second positioning portion 235 and horizontally reciprocates by a first conveyer 250. Retaining-grooves 245 corresponding to the lamps 110 are formed on the retaining-stage 240 to retain the lamps 110 in places. The retaining-grooves 245 may be of sufficient shape and depth to retain the lamps 110 in place on the retaining-stage 240 during movement on the conveyer 250 and to allow the lamps 110 to be easily gripped during a subsequent process, as will be described below. For example, the retaining-grooves 245 may have an uppermost width that is less than a diameter of the lamps 110.

Lamps 110 released from the first positioning portion 230 may be positioned in the odd-numbered retaining-grooves 245 and lamps 110 released from the second positioning portion 235 may be positioned in the even-numbered retaining-grooves 245. Accordingly, lamps 110 having opposite polarities are alternately arranged on the entire retaining-stage 240. When lamps 110 having opposite polarities are alternately installed in a container, it is possible to achieve a liquid crystal display ("LCD") with generally uniform luminance as compared with when lamps 110 having the same polarity are installed in the container.

After positioning of the lamps 110 in the retaining-grooves 245 is completed, the retaining-stage 240 is transferred to the first lamp press-fitting unit 300 by the first conveyer 250.

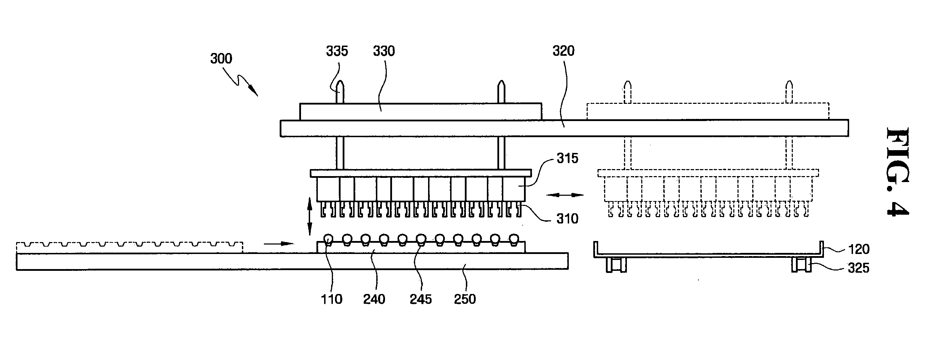

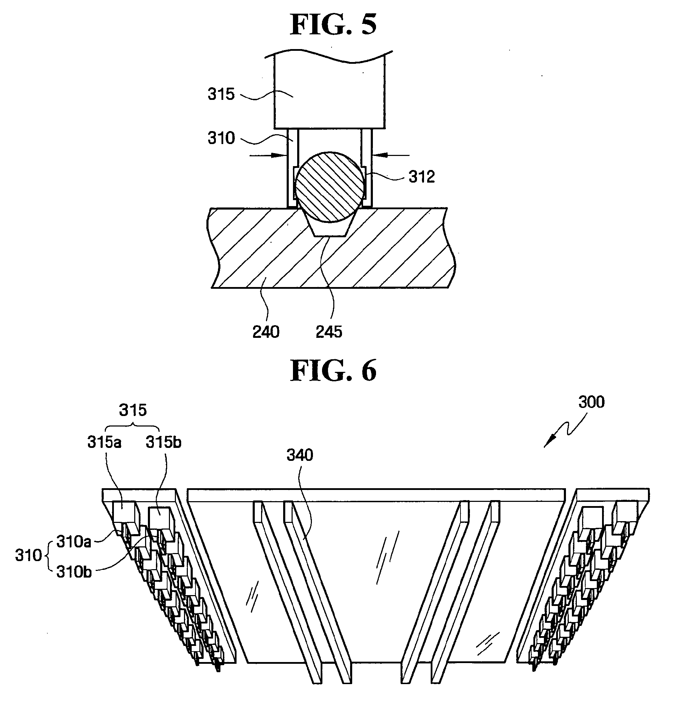

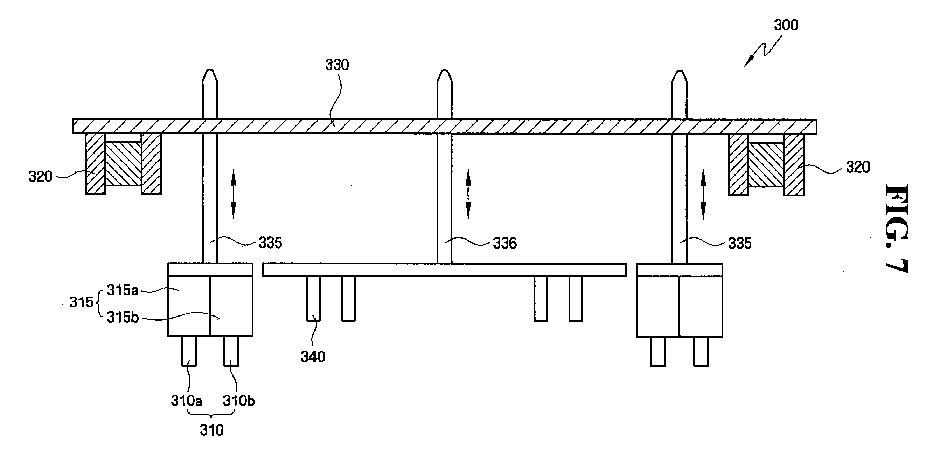

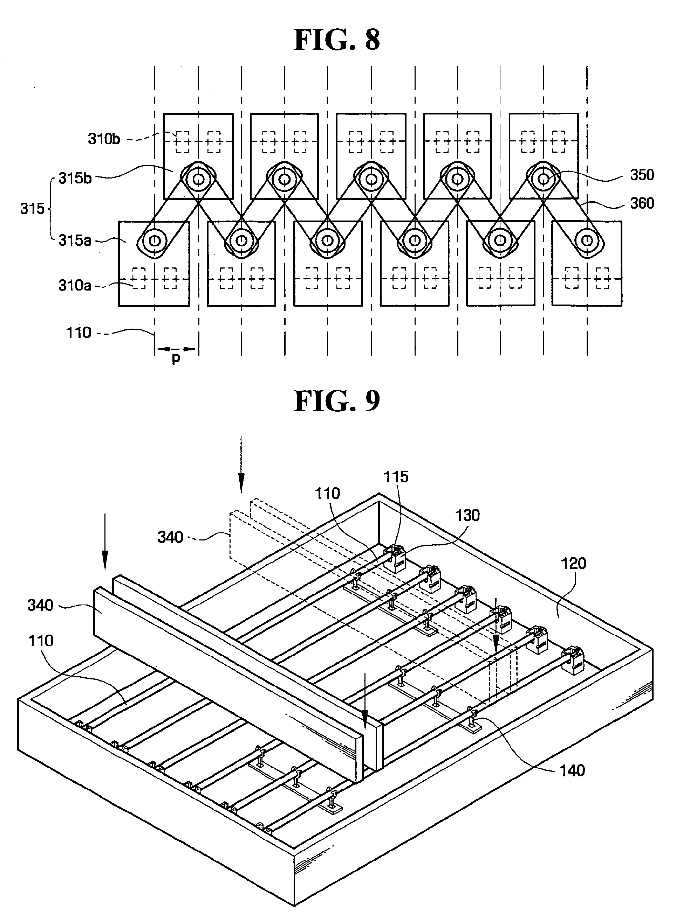

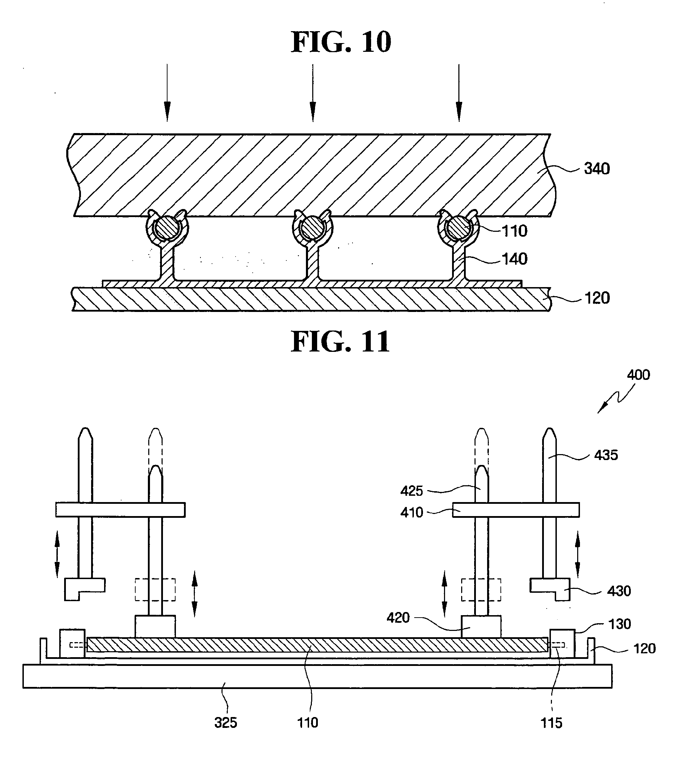

The first lamp press-fitting unit 300 is described hereafter in detail with reference to FIG. 1 and FIGS. 4 to 10. FIG. 4 is a view showing an exemplary first lamp press-fitting unit included in the exemplary apparatus for assembling lamps shown in FIG. 1, FIG. 5 is an enlarged view of an exemplary gripper shown in FIG. 4, FIG. 6 is a perspective view showing the bottom of the exemplary first lamp press-fitting unit shown in FIG. 4, FIG. 7 is a front view of the exemplary first lamp press-fitting unit shown in FIG. 6, FIG. 8 is a plan view of the exemplary gripper shown in FIG. 6, FIG. 9 is a perspective view of an exemplary body press-fitting portion shown in FIG. 6, and FIG. 10 is a cross-sectional view illustrating the relationship between lamps and the exemplary body press-fitting portion show in FIG. 9.

Referring to FIG. 1, the first lamp press-fitting unit 300 includes grippers 310 that hold and move corresponding lamps 110 and body press-fitting portions 340 that push down the lamp bodies to install the lamps 110 in the container 120, shown in FIG. 4.

Referring to FIG. 4, the grippers 310 are arranged for corresponding lamps 110. Gripper driving units 315 are connected with corresponding grippers 310 and activate the grippers 310 to hold the lamps 110. In detail, referring to FIG. 5, the gripper 310 is shaped like tongs and can easily hold a lamp 110 with gripping-grooves 312 formed on the inside faces of the gripper 310.

Returning to FIG. 4, the grippers 310 are connected to a movable stage 330 through first slidable bars 335. The slidable bars 335 control the up/down movement of the grippers 310. Specifically, after the lamps 110 on the retaining-stage 240 that have been transferred by the first conveyor 250 are loaded under the grippers 310, the grippers 310 descend by the first slidable bars 335 and hold corresponding lamps 110, thereafter ascend by the first slidable bars 335, and the retaining-stage 240 is unloaded. Lamps 110 may be positioned on the retaining-stage 240 by the lamp arrangement unit 200 with the previous lamps 110 removed.

After the lamps 110 held by the grippers 310 are lifted, the movable stage 330 is moved by a second conveyer 320 and positioned over the container 120. The second conveyor 320 may be positioned above the first conveyor 250. The container 120 may be provided from the outside by a third conveyer 325, which may be positioned below the second conveyor 320.

Referring to FIGS. 6 to 8, the grippers 310 are arranged in pairs for both ends of the corresponding lamps 110. That is, each end portion of each lamp 110 may be gripped by a gripper 310. At first ends of the lamps 110, the grippers 310 arranged to correspond to ends of each of the lamp 110 include a first gripper 310a and a second gripper 310b arranged in a zigzag pattern. The grippers 310 also include a first gripper 310a and a second gripper 310b arranged in a zigzag pattern at second ends of the lamps 110.

The first gripper 310a and the second gripper 310b each hold a different lamp 110. For example, the first gripper 310a holds a first end portion of a first lamp 110, whereas the second gripper 310b holds a first portion farther from the first end of a second lamp 110, as compared to that held by the first gripper 310a. The first and second grippers 310a, 310b are activated by a gripper driving unit 315 including first and second gripper driving units 315a, 315b, respectively.

As shown in FIG. 8, the first grippers 310a and the second grippers 310b are arranged in a zigzag pattern and connected through links 360 that connect link shafts 350 formed in the first grippers 310a and the second grippers 310b. The pitch p between the lamp 110 held by the first gripper 310a and the lamp 110 held by the second gripper 310b is adjustable by moving the links 360.

Referring to FIGS. 4 to 9, lamp supports 140, in which the lamp bodies are inserted, and sockets 130, for receiving leads 115 formed at both ends of the lamps 110, are arranged on the bottom of the container 120. The lamp supports 140 may be formed at various locations on the bottom of the container 120 between the sockets 130. In general, the pitch between the lamps 110 that are disposed on the lamp supports 140 may be changed from the specifications of LCDs. Further, the pitch between the retaining-grooves 245 on the retaining-stage 240 may be different from that between the lamps 110 disposed on the lamp supports 140. Therefore, it is preferable to arrange the grippers 310 in an adjustable zigzag pattern, such as by using the links 360, to adjust the pitch p between the lamps 110 as shown in FIG. 8, in order to apply the exemplary apparatus for assembling lamps according to an exemplary embodiment of the invention to LCDs having a variety of specifications.

Referring to FIGS. 6, 7, 9, and 10, the body press-fitting portions 340 are formed between the grippers 310. That is, a first set of grippers 310 are arranged relative to first ends of the lamps 110, a second set of grippers 310 are arranged relative to second ends of the lamps 110, and the body press-fitting portions 340 are arranged between the first and second set of grippers 310. After the lamps 110 with the adjusted pitch p are positioned on the lamp supports 140 in the container 120 by the grippers 310, the body press-fitting portions 340 fit the lamps 110 into the lamp supports 140 by pushing down the bodies of the lamps 110. The body press-fitting portions 340 are connected to the movable stage 330 by the second slidable bar 336 to reciprocate up/down. For example, the body press-fitting portions 340 may be formed in a plate shape, such that all lamps 110 arranged within the container 120 may be substantially simultaneously pushed into the lamp supports 140. In the illustrated embodiment, two pairs of body press-fitting portions 340 are shown, however alternate numbers of body press-fitting portions 340 would be within the scope of these embodiments.

After the bodies of the lamps 110 are fitted in the lamp supports 140, the container 120 is moved into the second lamp press-fitting unit 400 so that the leads 115 of the lamps 110 are inserted into the sockets 130 for electric connection of the lamps 110.

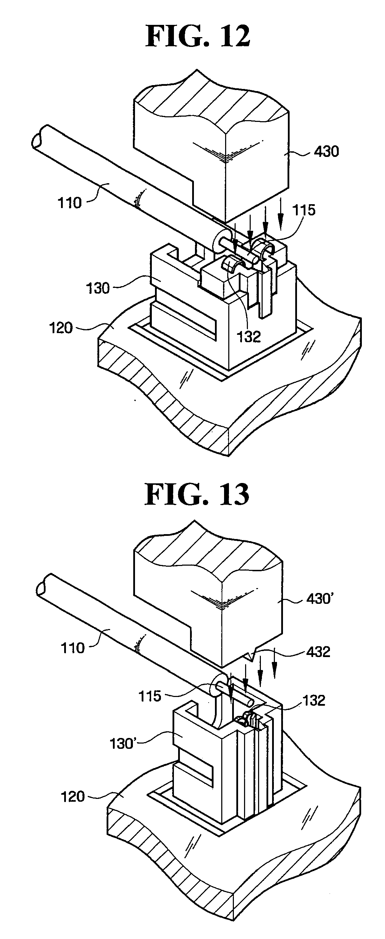

The second lamp press-fitting unit 400 is described hereafter in detail with reference to FIGS. 1, 11, and 12. FIG. 11 is a view showing the exemplary second lamp press-fitting unit included in the exemplary apparatus for assembling lamps shown in FIG. 1 and FIG. 12 is a view showing an exemplary lead press-fitting portion included in the exemplary second lamp press-fitting unit shown in FIG. 11.

Referring to FIGS. 1, 11, and 12, the second lamp press-fitting unit 400 includes lead press-fitting portions 430 that insert the leads 115 of the lamps 110 into the sockets 130 and lamp holders 420 that prevent the lamps 110 from moving from their position while the leads 115 are inserted. The lamp holders 420 and the lead press-fitting portions 430 are connected to support plates 410 through third and fourth slidable bars 425, 435, respectively. First and second support plates 410 may be arranged relative to first and second ends of the lamps 110. The third and fourth slidable bars 425, 435 control vertical reciprocation of the lamp holder 420 and the lead press-fitting portion 430, respectively.

First, the lamp holder 420 descends from above the lamp 110 and holds the lamp 110 by pressing it in order not to move. For example, the lamp holder 420 may be formed in a plate shape. However, the lamp holders 420 may be selectively removed by vertically moving the third slidable bar 425 when the lamp holders 420 are not needed to hold the lamps 110 while the lamp press-fitting portions 430 insert the leads 115 into the sockets 130.

It is preferable for the lead press-fitting portion 430 not to contact with the body of the lamp 110 while inserting the lead 115 into the socket 130, and the lead press-fitting portion 430 may be formed, for example, in an L-shape. After the lead 115 of the lamp 110 is positioned between a pair of open electric conductive clips 132, the lead press-fitting portion 430 presses the upper portion of the socket 130 and a gap between the conductive clips 132 is narrowed with the lead 115 fixed there between.

As described above, automatic lamp assemblage can be achieved, by fitting the bodies of the lamps 110 in the lamp supports 140 and the leads 115 of the lamps 110 in the sockets 130.

FIG. 13 is a modification for the exemplary lead press-fitting portion shown in FIG. 12.

Referring to FIG. 13, a pair of electric conductive clips 132 is disposed in a socket 130' and a protrusion 432 formed on the lower end of a lead press-fitting portion 430' presses a lead 115 from above the socket 130' to fit and fix the lead 115 within the electric conductive clip 132.

Although the second lamp press-fitting unit 400 is separated from the first lamp press-fitting unit 300 in the above description, it is not limited thereto. That is, the lamp holder 420 and the lead press-fitting portions 430 of the second lamp press-fitting unit 400 may be provided to the first lamp press-fitting unit 300. According to this configuration, fitting of the bodies and the leads 115 of the lamps 110 can be performed by one lamp press-fitting unit without moving the container 120.

An LCD is completed by positioning a liquid crystal panel into a backlight assembly including the container 120 equipped with the lamps 110. The liquid crystal panel includes a first substrate with thin film transistors ("TFTs") and pixel electrodes, a second substrate facing the first substrate, and a liquid crystal layer interposed between the first and second substrates.

As described above, according to an apparatus for assembling lamps and a method of assembling lamps using the apparatus, since lamps can be automatically assembled with ease even if the pitch is changed for various specifications of LCDs, it is possible to reduce the manufacturing time and cost.

Although the present invention has been described in connection with the exemplary embodiments of the present invention, it will be apparent to those skilled in the art that various modifications and changes may be made thereto without departing from the scope and spirit of the invention. Therefore, it should be understood that the above embodiments are not limitative, but illustrative in all aspects.

## Claims

1. An apparatus for assembling lamps, the apparatus comprising:
a lamp arrangement unit including a retaining-stage formed to receive a plurality of lamps; and
a lamp press-fitting unit including grippers that holds lamps positioned on the retaining-stage to move lamps, a body press-fitting portion that positions bodies of lamps into a container, and a lead press-fitting portion that positions leads of lamps into the container.

2. The apparatus of claim 1, wherein the lamp arrangement unit comprises:
first and second lamp storages provided to store lamps classified by polarity;
the retaining-stage; and
first and second lamp transfer portions arranged to transfer lamps from the first and second lamp storages to the retaining-stage.

3. The apparatus of claim 2, wherein the lamp arrangement unit alternately arranges lamps having opposite polarities on the retaining-stage.

4. The apparatus of claim 2, wherein the lamp arrangement unit further comprises first and second arrangement rollers that are disposed on the first and second lamp transfer portions, respectively, and rotate opposite to a movement direction of the first and second transfer portions to rearrange lamps on the first and second transfer portions.

5. The apparatus of claim 4, wherein the first and second arrangement rollers have an oval cross-section.

6. The apparatus of claim 1, wherein retaining-grooves are formed to correspond to lamps on a side of the retaining-stage in order to retain lamps.

7. The apparatus of claim 1, wherein the grippers are formed into tongs and have gripping-grooves on inside faces of the tongs.

8. The apparatus of claim 1, wherein the grippers are arranged in a zigzag pattern to correspond to opposite ends of lamps.

9. The apparatus of claim 8, wherein the grippers are connected through links in order for a pitch to be adjustable.

10. The apparatus of claim 1, wherein the container includes lamp supports in which bodies of lamps are fitted and sockets in which leads of lamps are fitted.

11. The apparatus of claim 10, wherein the body press-fitting portion inserts bodies of lamps into the lamp supports.

12. The apparatus of claim 11, wherein the body press-fitting portion has a plate shape.

13. The apparatus of claim 10, wherein the lead press-fitting portion inserts leads of lamps into the sockets for electric connection.

14. The apparatus of claim 13, wherein the lead press-fitting portion is formed in an L-shaped block.

15. The apparatus of claim 1, wherein the lamp press-fitting unit further comprises lamp holders that press and hold lamps so that lamps are not moved while the lead press-fitting portion operates.

16. The apparatus of claim 1, wherein the lamp press-fitting unit includes a movable stage movable along a conveyor, first slidable bars substantially perpendicularly movable with respect to the stage and connected to the grippers, and second slidable bars substantially perpendicularly movable with respect to the stage and connected to the body press-fitting portion.

17. A method of assembling lamps, the method comprising:
positioning a plurality of lamps onto a retaining-stage;
holding and moving the lamps from the retaining-stage to a container;
positioning the bodies of the lamp into the container with a body press-fitting portion; and
positioning leads of the lamps into the container with a lead press-fitting portion.

18. The method of claim 17, wherein positioning the lamps onto the retaining-stage comprises:
storing the lamps classified into two groups based on polarity; and
transferring the lamps classified into two groups to the retaining-stage.

19. The method of claim 18, wherein positioning the lamps includes alternately arranging the lamps having opposite polarities on the retaining-stage.

20. The method of claim 17, wherein positioning the leads of the lamps into the container with the lead press-fitting portion is applied after positioning the bodies of the lamps into the container with the body press-fitting portion.

21. The method of claim 17, wherein positioning the bodies of the lamps into the container with the body press-fitting portion and positioning the leads of the lamps into the container with the lead press-fitting portion are substantially simultaneously applied.
